# FASCICULE DE BREVET EUROPEEN

(11) **EP 3 313 917 B1**
(45) Date de publication et mention de la délivrance du brevet: **01.01.2020**
(21) Numéro de dépôt: 16747811.4
(22) Date de dépôt: 23.06.2016
(51) Int. Cl.: C08J 5/24, C08G 69/36, C08L 77/06, B29C 70/48, C08J 5/04, C08J 5/06

(54) **PROCEDE EN MOULE OUVERT POUR UN MATERIAU COMPOSITE DE MATRICE EN POLYAMIDE SEMI-CRISTALLIN RENFORCE FIBRES A PARTIR DE COMPOSITION PRECURSEUR REACTIVE DE PREPOLYMERE**
VERFAHREN ZUR OFFENFORMHERSTELLUNG EINES FASERVERSTÄRKTEN HALBKRISTALLINEN POLYAMID-MATRIX-VERBUNDWERKSTOFFS AUS EINER REAKTIVEN PRÄPOLYMER-VORLÄUFERZUSAMMENSETZUNG
METHOD FOR THE OPEN-MOULD PRODUCTION OF A FIBRE-REINFORCED SEMI-CRYSTALLINE POLYAMIDE MATRIX COMPOSITE MATERIAL FROM A PREPOLYMER REACTIVE PRECURSOR COMPOSITION

(30) Priorité: 24.06.2015 FR 1555819
(43) Date de publication de la demande: 02.05.2018
(73) Titulaire: Arkema France, 92700 Colombes (FR)
(72) Inventeur: CAPELOT, Mathieu, 27300 Bernay (FR); HOCHSTETTER, Gilles, 94240 L'hay Les Roses (FR)
(86) Numéro de dépôt international: PCT/FR2016/051536
(87) Numéro de publication internationale: WO 2016/207553

(56) Documents cités:
- WO-A1-2015/159015
- FR-A1- 2 997 089
- US-A1- 2008 274 355

## Description

La présente invention concerne un procédé de préparation d'un matériau composite renforcé fibres (dit également « renfort fibreux » par la suite) en moule ouvert et, en particulier, en pultrusion en utilisant une composition spécifique réactive à base de prépolymère, ladite composition réactive étant précurseur du polymère final de la matrice thermoplastique qui est en polyamide semi-cristallin ayant une température de transition vitreuse (Tg) élevée et supérieure à 80°C et un point de fusion élevé et inférieur à 280°C, avec une facilité d'imprégnation du substrat fibreux et une facilité de mise en œuvre dudit matériau composite à des températures contrôlées, sans risque de dégradation thermique dudit polymère matrice thermoplastique. Les produits matériaux composites issus de ce procédé sont utilisés dans des applications mécaniques de type pièces de structure dans le domaine de l'automobile, du transport routier, ferroviaire, maritime, aéronautique ou aérospatial ou dans la construction mécanique ou dans le bâtiment ou dans les parcs et loisirs ou pour des renforts de boucliers ou des panneaux de protection contre l'impact projectiles.

EP 0261 020 décrit l'utilisation de prépolymères semi-cristallins réactifs à base de PA 6, 11 et 12 pour la fabrication d'un composite thermoplastique par un procédé de pultrusion. Les prépolymères de structure aliphatique tels que décrits présentent des Tg faibles et des performances mécaniques insuffisantes à chaud.

EP 550 314 décrit, parmi ses exemples, des compositions (non réactives) de copolyamide en cherchant des températures de fusion (Tf) supérieures à 250°C et des Tg limitées avec la plupart des exemples cités ayant une Tg trop basse (< 80°C) ou une Tf trop élevée (> 300°C).

EP 1 988 113 décrit une composition de moulage à base d'un copolyamide 10T/6T avec :
- 40 à 95 % mol. de 10T
- 5 à 40 % mol. de 6T.

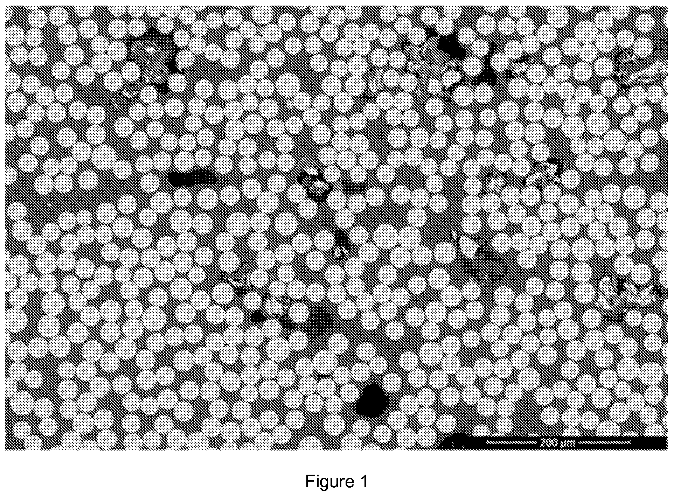

Sont visés en particulier des polyamides de température de fusion élevée et supérieure à 270°C. Les exemples mentionnés et la figure 1 nous enseignent que la température de fusion de ces compositions est d'au moins environ 280°C.

WO 2011/003973 décrit des compositions comprenant de 50 à 95 % mol. d'un motif à base d'une diamine aliphatique linéaire comportant de 9 à 12 atomes de carbone et d'acide téréphtalique et de 5 à 50 % de motif associant l'acide téréphtalique à un mélange de 2,2,4 et 2,4,4 triméthylhexanediamine.

US 2011306718 décrit un procédé de pultrusion de polyamides aliphatiques réactives de faible Tg associés à des allongeurs de chaînes de structure polymérique portant plusieurs (et bien supérieur à 2) fonctions d'anhydrides ou d'époxydes.

WO 2013/060976 décrit un procédé de matériau composite à base d'une composition réactive précurseur comprenant un prépolymère réactif avec des fonctions réactives identiques et un allongeur de chaîne non polymérique porteur de fonctions réactives avec les fonctions dudit prépolymère par polyaddition.

WO 2014/064375 décrit une composition réactive de prépolymère polyamide semi-cristallin mais dans tous les exemples avec une composition précurseur réactive, l'allongement est réalisé par un allongeur de nature différente à un prépolymère polyamide.

US 2008/274355 décrit la préparation d'un polyamide présentant une température de fusion de 279°C et une température de transition vitreuse de 212°C, à partir d'un précurseur obtenu à partir de l'hexaméthylène diamine, la 1,10-décaméthylène diamine et l'acide téréphtalique.

FR 2997089 décrit une composition de matériau composite, ledit matériau composite comprenant des fibres de renfort et une matrice thermoplastique imprégnant lesdites fibres, ladite matrice étant un polymère polyamide semi-cristallin avec une température de transition vitreuse d'au moins 90°C et une température de fusion inférieure ou égale à 280°C.

Le premier inconvénient surmonté par la présente invention par rapport à l'état de la technique concerne une imprégnation améliorée et plus homogène des fibres du renfort fibreux par l'utilisation d'une composition précurseur spécifique pour la matrice polymère semi-cristallin du matériau composite visé et avec des caractéristiques de prépolymères polyamides réactifs utilisés permettant une viscosité suffisamment faible pour une bonne imprégnation et adhérence sur les fibres avec des performances mécaniques qui en résultent plus homogènes et en même temps une bonne réactivité et cinétique de réaction et de cristallisation adaptées au procédé utilisé.

D'autre part, la présente invention permet un bon compromis entre les performances mécaniques et l'aptitude de mise en œuvre (facilité de transformation) à plus basse température. En effet, la solution de la présente invention vise des compositions de polyamide (PA) semi-cristallin permettant une mise en œuvre plus facile à des températures plus basses avec une économie sur le bilan énergétique du procédé de mise en œuvre. En particulier, ceci est permis par l'aptitude à la cristallisation rapide dudit polymère polyamide semi-cristallin par le choix spécifique de sa composition et ceci tout en maintenant à un niveau élevé les performances mécaniques desdits matériaux finaux. Plus particulièrement, les compositions réactives précurseur utilisées par le procédé, selon la présente invention, permettent une meilleure maîtrise de la cinétique de réaction, tout en ayant une vitesse de cristallisation du polymère formé rapide et une vitesse et/ou une température de cristallisation adaptées au procédé utilisé.

Le choix d'un polymère polyamide semi-cristallin comme matrice du matériau composite de l'invention a, comme intérêt par rapport aux polyamides amorphes, des performances mécaniques significativement améliorées notamment à chaud telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. Comme pour les amorphes, on recherche une Tg supérieure ou égale à 90°C pour assurer de bonnes propriétés mécaniques au composite sur toute la plage de température d'utilisation, par exemple jusqu'à 90°C pour l'éolien, jusqu'à 100°C pour l'automobile et jusqu'à 120°C pour l'aéronautique. Par contre, un point de fusion trop élevé, en particulier supérieur à 280°C, est néfaste car il nécessite la mise en œuvre du composite à des températures plus élevées avec des contraintes de matériel de moulage à utiliser (et système de chauffe associé) et une surconsommation énergétique avec en plus des risques de dégradation thermique par chauffage à des températures plus élevées que la température de fusion dudit polyamide. Une telle dégradation thermique a comme conséquence l'affectation des propriétés de la matrice thermoplastique finale et donc du matériau composite et pièce composite finale. La cristallinité dudit polymère doit être la plus élevée possible mais avec une température de fusion Tf pas trop élevée (Tf < 280°C et plus particulièrement ≤ 270°C) pour optimiser les performances mécaniques et la vitesse de cristallisation et/ou la température de cristallisation la plus élevée possible. Ainsi, un choix sélectif de la composition dudit polyamide semi-cristallin permet une mise en œuvre plus facile pour un procédé de mise en œuvre en moule ouvert, en particulier dans les conditions de mise en œuvre par pultrusion. Donc, l'objet de la présente invention est la mise en œuvre de nouvelles compositions spécifiques de matériau composite thermoplastique, en particulier à base de polyamide semi-cristallin, présentant un bon compromis entre des performances mécaniques élevées (tenue mécanique) en particulier à chaud et une mise en œuvre facile. Cela signifie que la présente invention vise des compositions faciles à mettre en œuvre avec des températures de transformation et de mise en œuvre plus basses que celles pour d'autres compositions de l'état de la technique, avec un bilan énergétique de mise en œuvre globale plus favorable et une productivité plus élevée. Plus particulièrement, la solution de l'invention avec ses compositions réactives spécifiques à base de prépolymères polyamides réactifs semi-cristallins permet, à la fois, une cinétique de réaction maitrisée lors de l'imprégnation et une cinétique de cristallisation rapide. Plus particulièrement, dans des cas spécifiques en fonction de la composition et/ou des conditions spécifiques de pultrusion, elle permet une production de profilés pultrudés avec une cadence supérieure à celle de procédés de pultrusion d'une composition thermodurcissable ou d'une composition précurseur monomérique. Plus particulièrement, la matrice polymère polyamide, tout en ayant une Tg élevée et une Tf limitée comme déjà définies, doit avoir également une vitesse de cristallisation élevée. Cette performance peut être caractérisée par l'écart entre la température de fusion Tf et de cristallisation Tc, Tf-Tc qui ne dépasse pas 60°C, de préférence ne dépasse pas 50°C et plus particulièrement ne dépasse pas 40°C. Les performances mécaniques ou tenue mécanique à chaud du composite peuvent être évaluées par la variation du module mécanique entre la température ambiante (23°C) et 100°C avec un maintien d'au moins à 75 % des performances mécaniques, en termes de contrainte à rupture, par rapport à celles à l'ambiante (23°C).

En particulier, les compositions réactives précurseurs à base d'un prépolymère réactif ayant des fonctions réactives identiques et d'un allongeur de chaîne non polymérique porteur de fonctions coréactives avec celles dudit prépolymère polymérisant par polyaddition, selon l'état de la technique, présentent l'inconvénient de conduire à des compositions avec une cinétique de réaction très rapide posant problème lors de l'étape d'imprégnation car, si la polymérisation est trop rapide, l'imprégnation est plus difficile. La solution de la présente invention basée sur l'utilisation de compositions réactives précurseurs à base de prépolymères réactifs (c'est-à-dire sans allongeur non polymérique) comme décrit ci-dessous, polymérisant par polycondensation, permet une cinétique plus lente et maîtrisée lors de l'étape d'imprégnation, permettant ainsi une imprégnation plus facile en moule ouvert et en particulier dans les conditions de mise en œuvre dudit matériau composite par la pultrusion.

Plus particulièrement, la solution de la présente invention basée sur l'utilisation de prépolymères réactifs (sans allongeur non polymérique) permet également de limiter la quantité d'eau dégagée lors de la polymérisation (en polycondensation) ce qui facilite son extraction du moule ouvert et permet d'obtenir un composite sans défauts (microbulles).

En outre, l'utilisation de prépolymère permet de réaliser l'étape de polymérisation séparément de l'étape d'imprégnation (sans polymérisation significative avant cette étape séparée de polymérisation) car la viscosité de la composition réactive de prépolymère est suffisante pour maintenir le préformage du matériau composite à la sortie d'une filière (après passage dans une filière) et avant ladite polymérisation séparée.

Donc, l'objet de l'invention est de mettre au point un procédé de matériau composite avec une composition précurseur à base de prépolymère polyamide spécifique répondant à tous ces besoins.

Le premier objet de l'invention concerne un procédé de fabrication en moule ouvert d'un matériau composite comprenant un renfort fibreux et une matrice thermoplastique polyamide semi-cristallin, ledit procédé comprenant la préparation à l'état fondu de ladite composition réactive précurseur, à base de prépolymère polyamide de composition spécifique, l'imprégnation en continu dudit renfort fibreux par ladite composition réactive, la polymérisation en masse et à l'état fondu de ladite composition, avec passage à travers une filière préformant ledit matériau composite et avec possibilité de post-polymérisation si la polymérisation n'est pas complète et en final un refroidissement dudit matériau composite ainsi fabriqué.

Le deuxième objet de l'invention concerne ladite composition réactive précurseur telle qu'utilisée dans ledit procédé.

L'invention couvre également le matériau composite obtenu par ledit procédé et un article obtenu à partir dudit matériau composite.

Le premier objet de l'invention concerne donc un procédé de fabrication d'un matériau composite thermoplastique en moule ouvert, ledit matériau comprenant des fibres de renfort (renfort fibreux) et une matrice thermoplastique polyamide imprégnant lesdites fibres, avec ladite matrice étant un polyamide semi-cristallin avec une température de transition vitreuse Tg d'au moins 80°C, de préférence d'au moins 90°C et plus préférentiellement d'au moins 100°C et avec une température de fusion Tf inférieure ou égale à 280°C et supérieure à 200°C, de préférence supérieure à 220°C, préparé in-situ par polymérisation en masse à l'état fondu par polycondensation, d'une composition précurseur réactive comprenant selon **A** au moins un premier prépolymère polyamide **A1** porteur de deux fonctions identiques X (X et X) ou Y (Y et Y) et au moins un second prépolymère polyamide **A2** porteur de deux fonctions identiques X (X et X) ou Y (Y et Y) différentes de celles de A1 et coréactives par rapport à celles de A1 ou d'une composition précurseur comprenant selon **B** au moins un prépolymère porteur (sur la même chaîne) de deux fonctions différentes X et Y coréactives entre elles ou d'une composition précurseur selon mélange de (A + B) : (A1 + A2 + B) avec lesdites fonctions X et Y étant respectivement carboxy (X) et amine (Y) et inversement (Y et X) et en ce que ledit procédé comprend les étapes successives suivantes :
i) préparation du mélange réactif A : (A1 + A2) ou du mélange réactif (A + B) : (A1 + A2 + B) par mélange des composants à l'état fondu ou fusion dudit prépolymère B si seul composant de ladite composition réactive précurseur, à une température supérieure à celle de la température de fusion Tf du mélange A ou du mélange (A + B) ou de la Tf dudit prépolymère B si seul composant de ladite composition précurseur,
ii) imprégnation continue desdites fibres, par ladite composition précurseur réactive, qui est le mélange A ou (A + B) ou ledit prépolymère B suivant le cas, à l'état fondu, avec une viscosité < 100 Pa.s, plus préférentiellement < 50 Pa.s, plus préférablement < 10 Pa.s dans les conditions d'imprégnation, dans une chambre d'imprégnation (2) chauffante ouverte, ladite imprégnation étant suivie d'un préformage en sortie de la chambre d'imprégnation (2) au moyen d'une filière (3),
iii) polymérisation in-situ par polycondensation à l'état fondu en masse dans ladite chambre d'imprégnation (2) et/ou en dehors de ladite chambre d'imprégnation, dans une zone dédiée (4) séparée de ladite chambre d'imprégnation (2) et d'une filière (3) de préformage dudit matériau et avec ladite zone (4) située à la suite de la chambre d'imprégnation et de ladite filière (3) et avec une durée et une température de polymérisation, contrôlées de sorte que la température de polymérisation soit supérieure à la température de fusion Tf dudit polyamide matrice thermoplastique,
iv) refroidissement dudit matériau qui peut avoir lieu à l'air ambiant,
et avec ledit polyamide final de ladite matrice et lesdits prépolymères A1, A2 ou B ayant la même composition en motifs amides, lesdits motifs amides étant issus de :
a) un composant diacide qui est de 95 à 100 %, de préférence à 100 % en moles de structure téréphtalique avec présence de 0 à 5% en moles de diacide isophtalique, de préférence a) étant à 100 % le diacide téréphtalique (dit aussi acide téréphtalique),
b) un composant diamine composé de :
   b1) de 55 à 85 %, de préférence de 55 à 80 % en moles d'une diamine linéaire aliphatique en C₉, C₁₀, C₁₁ ou C₁₂ et
   b2) de 15 à 45 %, de préférence de 20 à 45 % en moles d'une diamine différente de b1), sélectionnée parmi :
      b21) une diamine aliphatique monoramifiée avec substituant méthyle ou éthyle et ayant une différence de longueur de chaîne par rapport à la diamine b1) associée, d'au moins deux carbones, de préférence ladite diamine b2) étant la 2-méthyl pentaméthylène diamine (MPMD)
      b22) la m-xylylène diamine (mXD) ou
      b23) une diamine aliphatique linéaire en C₄ à C₁₈ quand b1) est une diamine aliphatique linéaire en C₁₀ à C₁₂ et avec b23) étant une diamine en C₁₀ à C₁₈ quand ladite diamine b1) est une diamine en C₉,
      et
c) en option un aminoacide ou suivant le cas le lactame correspondant en C₆ à C₁₂, de préférence en C₆, C₁₁ ou C₁₂ et plus préférentiellement en C₁₁, avec c) représentant pas plus de 30 % en moles par rapport à a) ou par rapport à b).

Ladite filière (3) en plus de sa fonction de préformatage dudit matériau composite a également comme fonction le compactage du matériau composite passant à travers ladite filière (3) par l'élimination des porosités consécutives à la formation de microbulles de vapeur d'eau formée par ladite réaction de polycondensation.

Plus particulièrement, ladite étape d'imprégnation est suivie d'un préformage dudit matériau en sortie de la chambre d'imprégnation (2) au moyen d'une filière (3).

Plus particulièrement, ladite polymérisation est réalisée dans ladite chambre d'imprégnation (2) avec en option une polymérisation supplémentaire, dite post-polymérisation, dans ladite zone (4) séparée de ladite chambre d'imprégnation (2) et de ladite filière (3).

Avantageusement, ladite polymérisation est réalisée dans ladite chambre d'imprégnation (2).

Avantageusement, ladite polymérisation est réalisée dans ladite chambre d'imprégnation (2) avec une polymérisation supplémentaire, dite post-polymérisation, dans ladite zone (4) séparée de ladite chambre d'imprégnation (2) et de ladite filière (3).

Selon une option particulière dudit procédé avant l'étape i) et l'étape ii), il y a une étape de préchauffage dans une zone dédiée (1) desdites fibres avant l'entrée dans ladite chambre d'imprégnation (2).

La température de polymérisation se situe au-dessus de la température de fusion Tf du polyamide matrice thermoplastique et de préférence au moins 10°C supérieure.

Le degré de polymérisation en sortie de la filière (3) peut être identique à celui du polyamide final visé pour ladite matrice thermoplastique. Dans ce cas, il n'y a pas besoin de polymérisation supplémentaire dite « post-polymérisation ».

Selon une autre possibilité, le degré de polymérisation à la sortie de ladite filière (3) peut être inférieur à celui du polyamide final visé pour ladite matrice thermoplastique et dans ce cas, ledit procédé comporte une étape supplémentaire de post-polymérisation dans une zone dédiée (4) séparée de ladite filière (3). Il est possible également que la polymérisation ait lieu que dans ladite zone dédiée (4) séparée. Ladite zone dédiée (4) séparée de ladite filière (3) peut être un four, en option un four sous vide et en option il peut y avoir une étape supplémentaire de mise en forme dudit matériau composite à la sortie dudit four (4).

Selon une autre option préférée, ladite chambre d'imprégnation (2) chauffante présente un gradient de température (croissante) entre l'entrée et la sortie de ladite chambre d'imprégnation (2). Ce gradient peut être adapté en fonction du degré de polymérisation visé en sortie de la filière (3) et de la cinétique de la réaction.

Selon une option particulière, la diamine b1) est la 1,10-décaméthylène diamine et la diamine b2) choisie parmi MPMD ou mXD avec a) étant l'acide téréphtalique.

De préférence, ledit polyamide comprend b1), b2) et c) et, dans ce cas, le rapport molaire en % de c / (b1+b2) ce qui signifie que c/b varie de 5 à 30 % et de préférence de 10 à 30 %.

Plus préférentiellement, ledit polyamide comprend (dans sa structure unitaire) le composant c) qui est choisi parmi l'amino-11 acide undécanoïque ou l'amino-12 acide laurique ou lauryl lactame.

Encore plus préférentiellement, ledit polyamide de ladite matrice thermoplastique a comme composants (comme lesdits prépolymères A1, A2 et B ont) : a) l'acide téréphtalique, b1) la 1,10-décaméthylène diamine, b2) la 1,6-hexaméthylène diamine ou la MPMD ou la mXD et c) l'amino-11 acide undécanoïque ou l'amino-12 acide laurique ou lauryl lactame.

Plus particulièrement, ledit polyamide (matrice comme prépolymères A1, A2 et B) a comme composants : a) l'acide téréphtalique, b1) la 1,10-décaméthylène diamine, b2) la 1,6-hexaméthylène diamine ou la MPMD ou la mXD et c) l'amino-11 acide undécanoïque.

Encore plus particulièrement, ledit polyamide (matrice comme prépolymères A1, A2 et B) a comme composants : a) l'acide téréphtalique, b1) la 1,10-décaméthylène diamine, b2) la 1,6-hexaméthylène diamine et c) l'amino-11 acide undécanoïque.

Selon une autre option particulièrement préférée, ledit polyamide a comme composants: a) l'acide téréphtalique, b1) la 1,10-décaméthylène diamine, b2) la 1,6-hexaméthylène diamine et c) l'amino-12 acide undécanoïque.

Dans le cas préféré où ledit composant c) est présent, lesdites compositions réactives de prépolymères (A1 + A2, B ou A1 + A2 + B) selon l'invention permettent une viscosité à l'état fondu plus faible par rapport aux mêmes compositions sans c), à masse moléculaire comparable. Ceci permet une amélioration significative de l'imprégnation dudit renfort fibreux. Alternativement, à viscosité à l'état fondu constante la présence de c) permet d'avoir des masses moléculaires de prépolymère plus élévées, ce qui revient à une concentration plus faible de fonctions réactives X, Y par polycondensation et ainsi une concentration plus faible d'eau de condensation à éliminer, avec facilitation de son élimination (eau de condensation) et au final un meilleur avancement de la polycondensation (masse moléculaire finale du polyamide de matrice plus élevée) et avec moins de défauts (microbulles) dans le matériau composite final liées à cette eau de condensation.

Plus particulièrement, le taux molaire de b1 / (b1+b2) varie de 55 à 75 % et le taux molaire de b2 / (b1+b2) varie de 25 à 45 %.

Selon une variante particulière, ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans au moins un constituant a), b) ou c) le plus fluide.

Le procédé de l'invention concerne en particulier et de manière préférée la pultrusion et plus particulièrement il s'agit d'une pultrusion avec lesdites fibres étant pultrudées en continu. Plus particulièrement, lesdites fibres pultrudées par des moyens de traction appropriés passent d'abord dans une zone de préchauffage (1) avant la chambre d'imprégnation (2) où la composition réactive précurseur est déposée en continu à l'état fondu avec polymérisation partielle ou complète in-situ et à la sortie préformage du matériau fibreux imprégné ainsi polymérisé par la filière (3) avec éventuelle post-polymérisation en zone séparée (4) pour parfaire ladite polymérisation et avant refroidissement dudit matériau qui peut se faire à l'air ambiant ou par des moyens de refroidissement contrôlé (vitesse contrôlée de refroidissement). Le matériau ainsi obtenu peut ensuite être transformé par thermo estampage ou par surmoulage d'un autre polymère thermoplastique compatible.

Selon une option particulière et préférée, ladite composition précurseur, telle que définie ci-haut, peut comprendre en plus desdits prépolymères, un additif qui absorbe le rayonnement d'un laser UV à une longueur d'onde spécifique ou d'un chauffage IR ou d'un chauffage par micro-onde ou d'un chauffage par induction pour les besoins de réchauffage dudit composite, en particulier pultrudé, avant une opération de transformation complémentaire, en particulier à la pultrusion, soit par thermo estampage, soit par surmoulage.

Concernant lesdites fibres dudit renfort fibreux, ce sont des fibres longues de L/D > 1000, de préférence > 2000 (L étant la longueur et D le diamètre desdites fibres). De préférence, lesdites fibres sont sélectionnées parmi les fibres minérales, de préférence de verre, de carbone ou de basalte, en particulier de verre et de carbone ou parmi les synthétiques, de préférence les fibres d'aramides ou de polyaryl éther cétones. Lesdites fibres peuvent représenter des taux de 45 à 75 % en volume dudit matériau composite, de préférence de 60 à 70 %.

Plus particulièrement, le procédé de l'invention concerne la fabrication d'une pièce de structure à base dudit matériau composite. Encore plus particulièrement, ladite pièce est une pièce dans le domaine du transport routier, ferroviaire, maritime, aéronautique ou aérospatial ou dans la construction mécanique ou dans le bâtiment ou dans les parcs et loisirs ou pour faire un renfort de boucliers ou de panneaux de protection contre l'impact projectiles. En particulier, ladite pièce de structure peut être une pièce automobile, éventuellement insérée dans une structure métallique comme la caisse en blanc d'un véhicule, éventuellement soumise (avec ladite pièce composite insérée) à un cycle de traitement thermochimique par cataphorèse. Ceci signifie que lesdites pièces composites pour cette utilisation doivent résister aux conditions de traitement par cataphorèse. En particulier, une Tf élevée de ladite pièce permet un tel traitement.

Plus particulièrement, la différence Tf-Tc entre la température de fusion Tf et la température de cristallisation Tc dudit polymère (polyamide) matrice ne dépasse pas 60°C, de préférence ne dépasse pas 50°C et plus particulièrement ne dépasse pas 40°C.

Selon une option particulière, l'enthalpie de cristallisation dudit polymère de matrice, mesurée en Calorimétrie Différentielle à Balayage (DSC) selon la Norme ISO 11357-3 :2013 est supérieure à 40 J/g, de préférence supérieure à 45 J/g.

Lesdits prépolymères A1, A2 et B, comme définis ci-haut, ont une masse moléculaire moyenne en nombre Mn allant de 500 à 10000, de préférence de 750 à 6000, plus préférentiellement de 750 à 3000. Toutes les masses Mn sont déterminées par le calcul à partir du taux des fonctions terminales déterminé par titration potentiométrique en solution et la fonctionnalité desdits prépolymères. Lesdits prépolymères polyamides peuvent être préparés selon les méthodes telles que décrites dans les exemples de prépolymères réactifs dans WO 2014/064375.

Concernant les différents paramètres définis selon l'invention, leur détermination est réalisée comme expliqué à la suite ci-dessous.

La viscosité à l'état fondu du prépolymère ou de la composition précurseur est mesurée suivant le manuel de référence du constructeur de l'appareil de mesure utilisé qui est un rhéomètre Physica MCR301, sous balayage d'azote à la température donnée sous cisaillement de 100 s⁻¹, entre deux plans parallèles de diamètre de 50 mm.

La Mn du prépolymère ou du polymère thermoplastique est déterminée à partir de la titration (dosage) des fonctions terminales selon une méthode potentiométrique (dosage direct pour NH2 ou carboxy) et à partir de la fonctionnalité théorique qui est de 2 (en fonctions terminales) pour prépolymères et polymères linéaires préparés à partir de monomères bifonctionnels seuls.

La mesure de la viscosité intrinsèque ou inhérente est réalisée dans le m-crésol. La méthode est bien connue de l'homme du métier. On suit la norme ISO 307 :2007, mais en changeant le solvant (utilisation du m-crésol à la place de l'acide sulfurique et la température étant de 20°C).

La température de transition vitreuse Tg des polymères thermoplastiques utilisés est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.

La température de fusion Tf et la température de cristallisation Tc sont mesurées par DSC, après une première chauffe, selon la norme ISO 11357-3 :2013. La vitesse de chauffage et de refroidissement est de 20°C/min.

L'enthalpie de cristallisation dudit polymère de matrice est mesurée en Calorimétrie Différentielle à Balayage (DSC) selon la norme ISO 11357-3 :2013.

Le deuxième objet de l'invention couvre ladite composition réactive précurseur à base de de prépolymère polyamide, pour la mise en œuvre du procédé tel que décrit ci-haut selon la présente invention, composition telle que déjà définie ci-haut. Elle correspond au mélange A : (A1 + A2), au mélange (A + B) ou au prépolymère B comme déjà définis ci-haut. De préférence, ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans au moins un constituant a), b) ou c) le plus fluide.

### DESCRIPTION DES FIGURES

La figure 1 présente la morphologie obtenue par microscopie électronique à balayage, après découpe de l'échantillon dans le sens transverse des fibres et préparation de l'échantillon par polissage ionique, après pultrusion à 1m/min d'un polymère thermoplastique de composition MPMDT/10T 41/59mol% de viscosité inhérente 0.99, introduit dans la filière à l'aide d'une extrudeuse tel que décrit dans le contre-exemple 1.

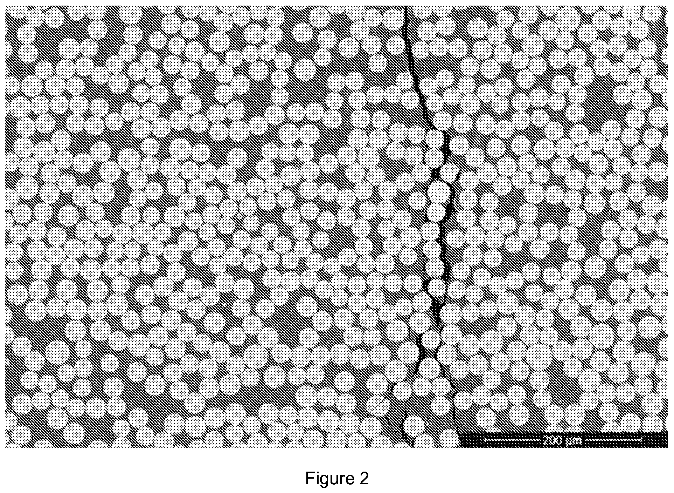

La figure 2 présente la morphologie obtenue par microscopie électronique à balayage, après découpe de l'échantillon dans le sens transverse des fibres et préparation de l'échantillon par polissage ionique, après pultrusion 0.3 m/min d'un polymère préparé avec deux prépolymères MPMDT/10T 41/59 mol% : un diacide de viscosité 0.37, et une diamine de viscosité 0.49, fondus séparément dans une extrudeuse et mélangés à l'aide d'un mélangeur statique avant d'être introduit dans la filière tel que décrit dans l'exemple 1.

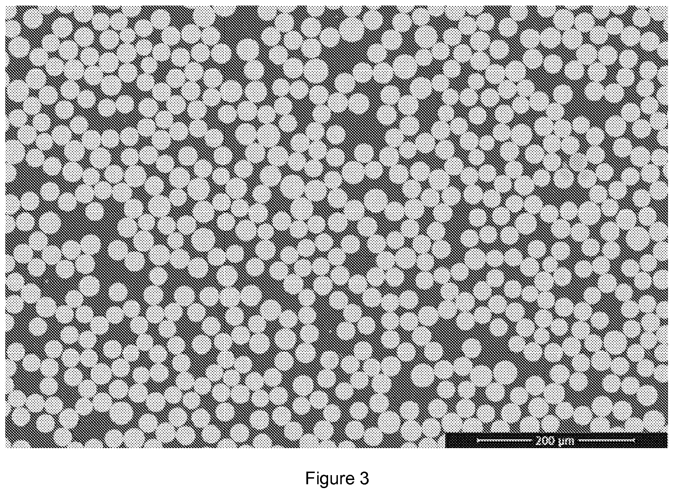

La figure 3 présente la morphologie obtenue par microscopie électronique à balayage, après découpe de l'échantillon dans le sens transverse des fibres et préparation de l'échantillon par polissage ionique, après pultrusion 1 m/min d'un polymère préparé avec deux prépolymères MPMDT/10T 41/59 mol% : un diacide de viscosité 0.37, et une diamine de viscosité 0.49, fondus séparément dans une extrudeuse et mélangés à l'aide d'un mélangeur statique avant d'être introduit dans la filière tel que décrit dans l'exemple 3.

### EXEMPLES

Les différents polymères des exemples et du contre-exemple sont préparés selon les procédés tels que décrits dans la demande internationale WO 2014/064375.

La viscosité inhérente des polymères est déterminée selon l'ISO 307 :2007, à une concentration de 0.5wt%, et une température de 20°C en utilisant le m-crésol.

Les images de morphologie sont obtenues par microscopie électronique à balayage, après découpe de l'échantillon dans le sens transverse des fibres et préparation de l'échantillon par polissage ionique.

Les propriétés mécaniques en traction des plaques pultrudées sont obtenues en réalisant des essais dans le sens des fibres selon l'ISO 527-4 (1997) sur des barreaux de l 250 mm x L 15 mm découpées à l'aide d'une tronçonneuse diamantée.

### Contre-exemple 1 :

Un essai de pultrusion a été réalisée à 1m/min à l'aide d'une filière de pultrusion cônique de longueur 30 cm, telle que décrite dans l'article « « Thermoplastic pultrusion process: modeling and optimal conditions for fibers impregnation », Journal of Reinforced Plastics and Composites, 32, 1285-1294 (2013), et d'un polymère thermoplastique de composition MPMDT/10T 41/59mol% de viscosité inhérente 0.99, introduit dans la filière à l'aide d'une extrudeuse.

Le taux de fibre est de 60% en volume. La morphologie présente de très nombreuses porosités, comme le confirme l'image obtenue par microscopie électronique à balayage présentée en figure 1.

La contrainte à la rupture obtenue est de 786 MPa.

### Exemple 1 :

Un essai similaire a été réalisé, à 0.3 m/min, en utilisant cette fois deux prépolymères MPMDT/10T 41/59 mol% : un diacide de viscosité 0.37, et une diamine de viscosité 0.49, fondus séparément dans une extrudeuse et mélangés à l'aide d'un mélangeur statique avant d'être introduit dans la filière. Le taux de fibre est de 60% en volume.

L'état d'imprégnation des fibres est bien meilleur, comme le confirme l'image obtenue par microscopie électronique à balayage présentée en figure 2, avec une absence de porosité. En revanche, on peut observer quelques fissures, probablement due à une masse molaire insuffisante du produit dans la filière.

La contrainte à la rupture obtenue est de 1098 MPa.

### Exemple 2 :

Un essai similaire à l'exemple 1 a été réalisé en utilisant des fours à infrarouge après la filière de pultrusion, afin de porter le polymère à une température d'environ 300°C afin de réaliser une post polymérisation pour améliorer les propriétés mécaniques. Le taux de fibre est de 60% en volume.

L'état d'imprégnation des fibres est excellent, et aucune fissure n'est détectée.

La contrainte à la rupture obtenue est de 1391 MPa.

### Exemple 3 :

Un essai similaire à l'exemple 1 a été réalisé, mais la vitesse a été augmentée à 1 m/min, et en utilisant des fours à infrarouge après la filière de pultrusion, afin de porter le polymère à une température d'environ 300°C.

L'état d'imprégnation des fibres est excellent, et aucune fissure n'est détectée, comme le montre la figure 3.

La contrainte à la rupture obtenue est de 1372 MPa.

## Revendications

1. Procédé de fabrication d'un matériau composite thermoplastique en moule ouvert, ledit matériau comprenant des fibres de renfort et une matrice thermoplastique polyamide imprégnant lesdites fibres, **caractérisé en ce que** ladite matrice est un polyamide semi-cristallin avec une température de transition vitreuse Tg d'au moins 80°C, de préférence d'au moins 90°C et plus préférentiellement d'au moins 100°C et avec une température de fusion Tf inférieure ou égale à 280°C et supérieure à 200°C, de préférence supérieure à 220°C, préparé in-situ par polymérisation en masse à l'état fondu par polycondensation, d'une composition précurseur réactive comprenant selon A au moins un premier prépolymère polyamide A1 porteur de deux fonctions identiques X (X et X) ou Y (Y et Y) et au moins un second prépolymère polyamide A2 porteur de deux fonctions identiques X (X et X) ou Y (Y et Y), différentes de celles de A1 et coréactives par rapport à celles de A1 ou d'une composition précurseur comprenant selon B au moins un prépolymère porteur (sur la même chaîne) de deux fonctions différentes X et Y coréactives entre elles ou d'une composition précurseur selon mélange de (A + B), avec lesdites fonctions X et Y étant respectivement carboxy (X) et amine (Y) et inversement (Y et X), lesdites températures de transition vitreuse Tg et de fusion Tf étant mesurées à l'aide d'un calorimètre différentiel à balayage (DSC), après un deuxième passage en chauffe, suivant respectivement la norme ISO 11357-2 :2013 et 11357-3 :2013, avec une vitesse de chauffage et de refroidissement est de 20°C/min, et **en ce que** ledit procédé comprend les étapes successives suivantes :
i) préparation du mélange réactif A : (A1 + A2) ou du mélange réactif (A + B) : (A1 + A2 + B) par mélange des composants à l'état fondu ou fusion dudit prépolymère B si seul composant de ladite composition réactive précurseur, à une température supérieure à celle de la température de fusion Tf du mélange A ou du mélange (A + B) ou de la Tf dudit prépolymère B si seul composant de ladite composition précurseur,
ii) imprégnation continue desdites fibres par ladite composition précurseur réactive, qui est le mélange A ou (A + B) ou ledit prépolymère B suivant le cas, à l'état fondu, avec une viscosité < 100 Pa.s, plus préférentiellement < 50 Pa.s, plus préférablement < 10 Pa.s dans les conditions d'imprégnation, dans une chambre d'imprégnation (2) chauffante ouverte, ladite imprégnation étant suivie d'un préformage en sortie de la chambre d'imprégnation (2) au moyen d'une filière (3), ladite viscosité à l'état fondu étant déterminée avec un rhéomètre Physica MCR301 , sous balayage d'azote à la température donnée sous cisaillement de 100 s⁻¹, entre deux plans parallèles de diamètre de 50 mm,
iii) polymérisation in-situ par polycondensation à l'état fondu en masse dans ladite chambre d'imprégnation (2) et/ou en dehors de ladite chambre d'imprégnation, dans une zone dédiée (4) séparée de ladite chambre d'imprégnation (2) et d'une filière (3) de préformage dudit matériau et avec ladite zone (4) située à la suite de la chambre d'imprégnation et de ladite filière (3) et avec une durée et une température de polymérisation contrôlées de sorte que la température de polymérisation soit supérieure à la température de fusion Tf dudit polyamide matrice thermoplastique,
iv) refroidissement dudit matériau,
et avec ledit polyamide final de ladite matrice et lesdits prépolymères A1, A2 ou B ayant la même composition en motifs amides et lesdits motifs amides étant issus de :
a) un composant diacide qui est de 95 à 100 %, de préférence à 100 % en moles de structure téréphtalique avec présence de 0 à 5 % en moles de diacide isophtalique, de préférence a) étant à 100 % le diacide téréphtalique,
b) un composant diamine composé de :
b1) de 55 à 85 %, de préférence de 55 à 80 % en moles d'une diamine linéaire aliphatique en C₉, C₁₀, C₁₁ ou C₁₂ et
b2) de 15 à 45 %, de préférence de 20 à 45 % en moles d'une diamine différente de b1), sélectionnée parmi :
b21) une diamine aliphatique monoramifiée avec substituant méthyle ou éthyle et ayant une différence de longueur de chaîne par rapport à la diamine b1) associée, d'au moins deux carbones, de préférence ladite diamine b2) étant la 2-méthyl pentaméthylène diamine
b22) la m-xylylène diamine (mXD) ou
b23) une diamine aliphatique linéaire en C₄ à C₁₈ quand b1) est une diamine aliphatique linéaire en C₁₀ à C₁₂ et avec b23) étant une diamine en C₁₀ à C₁₈ quand ladite diamine b1 est une diamine en C₉,
et
c) en option, un aminoacide ou suivant le cas le lactame correspondant en C₆ à C₁₂, de préférence en C₆, C₁₁ ou C₁₂ et plus préférentiellement en C₁₁, avec c) représentant pas plus de 30 % en moles par rapport à a) ou par rapport à b).

2. Procédé selon la revendication 1, **caractérisé en ce que** ladite polymérisation est réalisée dans ladite chambre d'imprégnation (2).

3. Procédé selon la revendication 1, **caractérisé en ce que** ladite polymérisation est réalisée dans ladite chambre d'imprégnation (2) avec une polymérisation supplémentaire, dite post-polymérisation, dans ladite zone (4) séparée de ladite chambre d'imprégnation (2) et de ladite filière(3).

4. Procédé selon l'une des revendications 1 à 3, **caractérisé en ce qu'**avant l'étape i) et l'étape ii) il y a une étape de préchauffage dans une zone dédiée (1) desdites fibres avant l'entrée dans ladite chambre d'imprégnation (2).

5. Procédé selon l'une des revendications 1 à 4, **caractérisé en ce que** le degré de polymérisation en sortie de la filière (3) est identique à celui du polyamide final visé pour ladite matrice thermoplastique.

6. Procédé selon l'une des revendications 1 à 4, **caractérisé en ce que** le degré de polymérisation à la sortie de ladite filière (3) reste inférieur à celui du polyamide final visé pour ladite matrice thermoplastique et que dans ce cas, ledit procédé comporte une étape supplémentaire de post-polymérisation dans une zone dédiée (4) séparée de ladite filière (3).

7. Procédé selon la revendication 6, **caractérisé en ce que** ladite zone dédiée (4) séparée de ladite filière (3) est un four, en option un four sous vide et en option il y a une étape supplémentaire de mise en forme dudit matériau composite à la sortie dudit four.

8. Procédé selon l'une des revendications 1 à 7, **caractérisé en ce que** ladite chambre d'imprégnation (2) chauffante présente un gradient de température (croissante) entre l'entrée et la sortie de ladite chambre d'imprégnation (2).

9. Procédé selon l'une des revendications 1 à 8, **caractérisé en ce que** ledit polyamide comprend b1), b2) et c) et que le rapport molaire en % de c / (b1+b2) varie de 5 à 30 % et de préférence de 10 à 30 %.

10. Procédé selon l'une des revendications 1 à 9, **caractérisé en ce que** ledit polyamide comprend c) choisi parmi l'amino-11 acide undécanoïque ou l'amino-12 acide laurique ou lauryl lactame.

11. Procédé selon l'une des revendications 1 à 10, **caractérisé en ce que** ledit polyamide a comme composants a) l'acide téréphtalique, b1) la 1,10-décaméthylène diamine, b2) la 1,6-hexaméthylène diamine ou la 2-méthyl pentaméthylène diamine (MPMD)_ou la mXD et c) l'amino-11 acide undécanoïque ou l'amino-12 acide laurique ou lauryl lactame.

12. Procédé selon l'une des revendications 1 à 11, **caractérisé en ce que** ledit polyamide a comme composants a) l'acide téréphtalique, b1) la 1,10-décaméthylène diamine, b2) la 1,6-hexaméthylène diamine et c) l'amino-11 acide undécanoïque.

13. Procédé selon l'une des revendications 1 à 11, **caractérisé en ce que** ledit polyamide a comme composants a) l'acide téréphtalique, b1) la 1,10-décaméthylène diamine, b2) la 1,6- hexaméthylène diamine et c) l'amino-12 acide undécanoïque.

14. Procédé selon l'une des revendications 1 à 10, **caractérisé en ce que** b1) est la 1,10-décaméthylène diamine et b2) est choisie parmi MPMD ou mXD et a) est l'acide téréphtalique.

15. Procédé selon l'une des revendications 1 à 14, **caractérisé en ce que** le taux molaire de b1 / (b1+b2) varie de 55 à 75 % et que le taux molaire de b2 / (b1+b2) varie de 25 à 45 %.

16. Procédé selon l'une des revendications 1 à 15, **caractérisé en ce que** ladite composition précurseur réactive comprend au moins une nanocharge d'origine carbonique choisie parmi : noir de carbone, graphènes, nanofibrilles de carbone et nanotubes de carbone, ladite nanocharge étant ajoutée sous forme préalablement dispersée dans au moins un constituant a), b) ou c) le plus fluide.

17. Procédé selon l'une des revendications 1 à 16, **caractérisé en ce qu'**il s'agit d'une pultrusion avec lesdites fibres étant pultrudées en continu.

18. Procédé selon l'une des revendications 1 à 17, **caractérisé en ce que** ladite composition précurseur comprend en plus desdits prépolymères un additif qui absorbe le rayonnement d'un laser UV à une longueur d'onde spécifique ou d'un chauffage IR ou d'un chauffage par micro-onde ou d'un chauffage par induction pour les besoins de réchauffage dudit composite, en particulier pultrudé, avant une opération de transformation complémentaire, en particulier à la pultrusion, soit par thermo estampage soit par surmoulage.

19. Procédé selon l'une des revendications 1 à 18, **caractérisé en ce que** lesdites fibres sont des fibres longues de L/D > 1000, de préférence > 2000.

20. Procédé selon l'une des revendications 1 à 19, **caractérisé en ce que** lesdites fibres sont sélectionnées parmi les fibres minérales, de préférence de verre, de carbone ou de basalte en particulier de verre ou de carbone ou parmi les synthétiques, de préférence les fibres d'aramides ou de polyaryl éther cétones.

21. Procédé selon l'une des revendications 1 à 20, **caractérisé en ce qu'**il concerne la fabrication d'une pièce de structure à base dudit matériau composite.

22. Procédé selon la revendication 21, **caractérisé en ce que** ladite pièce est une pièce dans le domaine du transport routier, ferroviaire, maritime, aéronautique ou aérospatial ou dans la construction mécanique ou dans le bâtiment ou dans les parcs et loisirs ou pour faire un renfort de boucliers ou de panneaux de protection contre l'impact projectiles.

23. Procédé selon l'une des revendications 21 ou 22, **caractérisé en ce que** ladite pièce de structure est une pièce automobile, éventuellement insérée dans une structure métallique comme la caisse en blanc d'un véhicule, éventuellement soumise à un cycle de traitement thermochimique par cataphorèse.

## Patentansprüche

1. Verfahren zur Herstellung eines thermoplastischen Verbundmaterials in einer offenen Form, wobei das Material Verstärkungsfasern und eine die Fasern imprägnierende thermoplastische Polyamidmatrix umfasst, **dadurch gekennzeichnet, dass** die Matrix ein teilkristallines Polyamid mit einer Glasübergangstemperatur Tg von mindestens 80 °C, vorzugsweise von mindestens 90 °C und mehr bevorzugt von mindestens 100 °C und mit einer Schmelztemperatur Tf von weniger als oder gleich 280 °C und mehr als 200 °C, vorzugsweise mehr als 220 °C ist, hergestellt in situ durch Massepolymerisation in geschmolzenem Zustand durch Polykondensation einer reaktiven Vorläuferzusammensetzung, umfassend gemäß A mindestens ein erstes Polyamidpräpolymer A1 mit zwei identischen Funktionen X (X und X) oder Y (Y und Y) und mindestens ein zweites Polyamidpräpolymer A2 mit zwei identischen Funktionen X (X und X) oder Y (Y und Y), die sich von denen von A1 unterscheiden und in Bezug auf die von A1 koreaktiv sind, oder einer Vorläuferzusammensetzung, umfassend gemäß B mindestens ein Präpolymer mit zwei verschiedenen Funktionen X und Y (in derselben Kette), die miteinander koreaktiv sind, oder einer Vorläuferzusammensetzung gemäß einer Mischung von (A + B), wobei die Funktionen X und Y jeweils Carboxy (X) und Amin (Y) sind und umgekehrt (Y und X), wobei die Glasübergangstemperatur Tg und die Schmelztemperatur Tf mit einem Differentialscanningkalorimeter (DSC) nach einem zweiten Erwärmungsdurchgang gemäß der Norm ISO 11357-2:2013 bzw. 11357-3:2013 mit einer Heiz- und Abkühlgeschwindigkeit von 20 °C/min gemessen werden, und dass das Verfahren die folgenden aufeinanderfolgenden Schritte umfasst:
(i) Herstellen der reaktiven Mischung A: (A1 + A2) oder der reaktiven Mischung (A + B): (A1 + A2 + B) durch Mischen der Komponenten in geschmolzenem Zustand oder Schmelzen des Präpolymers B, sofern einzige Komponente der reaktiven Vorläuferzusammensetzung, bei einer Temperatur, die höher ist als die der Schmelztemperatur Tf der Mischung A oder der Mischung (A + B) oder der Tf des Präpolymers B, sofern einzige Komponente der Vorläuferzusammensetzung,
ii) kontinuierliches Imprägnieren der Fasern mit der reaktiven Vorläuferzusammensetzung, bei der es sich um die Mischung A oder (A + B) bzw. das Präpolymer B handelt, in geschmolzenem Zustand mit einer Viskosität < 100 Pa.s, mehr bevorzugt < 50 Pa.s, mehr bevorzugt < 10 Pa.s unter Imprägnierbedingungen in einer offenen beheizten Imprägnierkammer (2), wobei dem Imprägnieren ein Vorformen am Ausgang der Imprägnierkammer (2) mittels einer Matrize (3) folgt, wobei die Viskosität in geschmolzenem Zustand mit einem Physica MCR301-Rheometer unter Stickstoffspülung bei der gegebenen Temperatur bei einer Scherung von 100 s⁻¹ zwischen zwei parallelen Ebenen mit einem Durchmesser von 50 mm bestimmt wird,
(iii) In-situ-Polymerisation durch Massepolykondensation in geschmolzenem Zustand in der Imprägnierkammer (2) und/oder außerhalb der Imprägnierkammer in einem speziellen Bereich (4), der von der Imprägnierkammer (2) und einer Matrize (3) zum Vorformen des Materials getrennt ist, und wobei sich der Bereich (4) hinter der Imprägnierkammer und der Matrize (3) befindet, und mit einer kontrollierten Polymerisationszeit und -temperatur derart, dass die Polymerisationstemperatur höher als die Schmelztemperatur Tf der thermoplastischen Polyamidmatrix ist,
iv) Abkühlen des Materials,
und wobei das endgültige Polyamid der Matrix und die Präpolymere A1, A2 oder B die gleiche Zusammensetzung in Amideinheiten aufweisen und die Amideinheiten abgeleitet sind von:
a) einer Disäurekomponente, die zu 95 bis 100 %, vorzugsweise zu 100 Mol-% terephthalischer Struktur ist und zu 0 bis 5 Mol-% aus Isophthalsäure besteht, wobei a) vorzugsweise zu 100 % Terephthalsäure ist,
b) einer Diaminkomponente, bestehend aus:
b1) zu 55 bis 85 Mol-%, vorzugsweise zu 55 bis 80 Mol-% einem aliphatischen linearen C₉-, C₁₀-, C₁₁- oder C₁₂-Diamin und
b2) zu 15 bis 45 %, vorzugsweise zu 20 bis 45 Mol-% einem von b1) verschiedenen Diamin, ausgewählt aus:
b21) einem monoramifizierten aliphatischen Diamin mit Methyl- oder Ethylsubstituenten und mit einer Kettenlängendifferenz zu dem zugehörigen Diamin b1) von mindestens zwei Kohlenstoffen, wobei das Diamin b2) vorzugsweise das 2-Methylpentamethylendiamin ist
b22) dem m-Xylylendiamin (mXD) oder
b23) einem linearen aliphatischen C₄- bis C₁₈-Diamin, wenn b1) ein lineares aliphatisches C₁₀- bis C₁₂-Diamin ist, und wobei b23) ein C₁₀- bis C₁₈-Diamin ist, wenn das Diamin b1 ein C₉-Diamin ist,
und
c) wahlweise einer Aminosäure oder je nach Fall dem entsprechenden C₆-bis C₁₂-, vorzugsweise C₆-, C₁₁- oder C₁₂- und mehr bevorzugt C₁₁-Lactam, wobei c) nicht mehr als 30 Mol-% bezogen auf a) oder auf b) ausmacht.

2. Verfahren nach Anspruch 1, **dadurch gekennzeichnet, dass** die Polymerisation in der Imprägnierkammer (2) erfolgt.

3. Verfahren nach Anspruch 1, **dadurch gekennzeichnet, dass** die Polymerisation in der Imprägnierkammer (2) mit einer zusätzlichen Polymerisation, der so genannten Nachpolymerisation, in dem von der Imprägnierkammer (2) und der Matrize (3) getrennten Bereich (4) erfolgt.

4. Verfahren nach einem der Ansprüche 1 bis 3, **dadurch gekennzeichnet, dass** vor Schritt i) und Schritt ii) ein Vorwärmschritt in einem speziellen Bereich (1) der Fasern vor Eintritt in die Imprägnierkammer (2) erfolgt.

5. Verfahren nach einem der Ansprüche 1 bis 4, **dadurch gekennzeichnet, dass** der Polymerisationsgrad am Ausgang der Matrize (3) mit dem des endgültigen Polyamids für die thermoplastische Matrix identisch ist.

6. Verfahren nach einem der Ansprüche 1 bis 4, **dadurch gekennzeichnet, dass** der Polymerisationsgrad am Ausgang der Matrize (3) geringer bleibt als der des endgültigen Polyamids für die thermoplastische Matrix und dass das Verfahren in diesem Fall einen zusätzlichen Nachpolymerisationsschritt in einem speziellen Bereich (4), der von der Matrize (3) getrennt ist, umfasst.

7. Verfahren nach Anspruch 6, **dadurch gekennzeichnet, dass** der von der Matrize (3) getrennte spezielle Bereich (4) ein Ofen, wahlweise ein Vakuumofen ist und dass wahlweise ein zusätzlicher Schritt zum Formen des Verbundmaterials am Ausgang des Ofens erfolgt.

8. Verfahren nach einem der Ansprüche 1 bis 7, **dadurch gekennzeichnet, dass** die beheizte Imprägnierkammer (2) einen (ansteigenden) Temperaturgradienten zwischen dem Eingang und dem Ausgang der Imprägnierkammer (2) aufweist.

9. Verfahren nach einem der Ansprüche 1 bis 8, **dadurch gekennzeichnet, dass** das Polyamid b1), b2) und c) umfasst und dass das Molverhältnis in % von c / (b1+b2) von 5 bis 30 % und vorzugsweise von 10 bis 30 % variiert.

10. Verfahren nach einem der Ansprüche 1 bis 9, **dadurch gekennzeichnet, dass** das Polyamid c) umfasst, ausgewählt aus 11-Aminoundecansäure oder 12-Aminolaurinsäure oder Lauryllactam.

11. Verfahren nach einem der Ansprüche 1 bis 10, **dadurch gekennzeichnet, dass** das Polyamid als Komponenten a) Terephthalsäure, b1) 1,10-Decamethylendiamin, b2) 1,6-Hexamethylendiamin oder 2-Methylpentamethylendiamin (MPMD) oder mXD und c) 11-Aminoundecansäure oder 12-Aminolaurinsäure oder Lauryllactam aufweist.

12. Verfahren nach einem der Ansprüche 1 bis 11, **dadurch gekennzeichnet, dass** das Polyamid als Komponenten a) Terephthalsäure, b1) 1,10-Decamethylendiamin, b2) 1,6-Hexamethylendiamin und c) 11-Aminoundecansäure aufweist.

13. Verfahren nach einem der Ansprüche 1 bis 11, **dadurch gekennzeichnet, dass** das Polyamid als Komponenten a) Terephthalsäure, b1) 1,10-Decamethylendiamin, b2) 1,6-Hexamethylendiamin und c) 12-Aminoundecansäure aufweist.

14. Verfahren nach einem der Ansprüche 1 bis 10, **dadurch gekennzeichnet, dass** b1) 1,10-Decamethylendiamin ist und b2) ausgewählt ist aus MPMD oder mXD und a) Terephthalsäure ist.

15. Verfahren nach einem der Ansprüche 1 bis 14, **dadurch gekennzeichnet, dass** die Molrate von b1 / (b1+b2) von 55 bis 75 % und dass die Molrate von b2 / (b1+b2) von 25 bis 45 % variiert.

16. Verfahren nach einem der Ansprüche 1 bis 15, **dadurch gekennzeichnet, dass** die reaktive Vorläuferzusammensetzung mindestens einen Nanofiller kohlenstoffhaltigen Ursprungs umfasst, ausgewählt aus: Ruß, Graphenen, Kohlenstoff-Nanofibrillen und Kohlenstoff-Nanoröhrchen, wobei der Nanofiller in einer Form zugesetzt wird, die zuvor in mindestens einem Bestandteil a), b) oder c), der am fluidischsten ist, dispergiert wurde.

17. Verfahren nach einem der Ansprüche 1 bis 16, **dadurch gekennzeichnet, dass** es sich um eine Pultrusion handelt, bei der die Fasern kontinuierlich pultrudiert werden.

18. Verfahren nach einem der Ansprüche 1 bis 17, **dadurch gekennzeichnet, dass** die Vorläuferzusammensetzung zusätzlich zu den Präpolymeren ein Additiv umfasst, das die Strahlung eines UV-Lasers bei einer bestimmten Wellenlänge oder eines IR-Heizgeräts oder eines Mikrowellen-Heizgeräts oder eines Induktionsheizgeräts für die Zwecke des Erwärmens des Verbundwerkstoffs, der insbesondere pultrudiert ist, vor einem Umwandlungsvorgang, der insbesondere zur Pultrusion komplementär ist, entweder durch Thermostanzen oder durch Umspritzen, absorbiert.

19. Verfahren nach einem der Ansprüche 1 bis 18, **dadurch gekennzeichnet, dass** die Fasern Langfasern mit UD > 1.000, vorzugsweise > 2.000 sind.

20. Verfahren nach einem der Ansprüche 1 bis 19, **dadurch gekennzeichnet, dass** die Fasern ausgewählt sind aus Mineralfasern, vorzugsweise Glas-, Kohlenstoff- oder Basaltfasern, insbesondere Glas- oder Kohlenstofffasern, oder Kunstfasern, vorzugsweise Aramid- oder Polyaryletherketonfasern.

21. Verfahren nach einem der Ansprüche 1 bis 20, **dadurch gekennzeichnet, dass** es sich um die Herstellung eines Strukturteils auf Basis des Verbundwerkstoffs handelt.

22. Verfahren nach Anspruch 21, **dadurch gekennzeichnet, dass** es sich bei dem Teil um ein Teil im Bereich des Straßen-, Schienen-, See-, Luft- oder Raumfahrtverkehrs oder im Maschinenbau oder im Bauwesen oder in Parks und Freizeit oder zum Verstärken von Abschirmungen oder Schutzplatten gegen Projektilaufprall handelt.

23. Verfahren nach einem der Ansprüche 21 oder 22, **dadurch gekennzeichnet, dass** das Strukturteil ein Automobilteil ist, das möglicherweise in eine Metallstruktur wie die Rohkarosserie eines Fahrzeugs eingesetzt wird, die möglicherweise einem thermochemischen Behandlungszyklus durch Kataphorese unterzogen wird.

## Claims

1. A process for manufacturing a thermoplastic composite material in an open mold, said material comprising reinforcing fibers and a polyamide thermoplastic matrix impregnating said fibers, **characterized in that** said matrix is a semicrystalline polyamide with a glass transition temperature Tg of at least 80°C, preferably of at least 90°C and more preferentially of at least 100°C and with a melting temperature Tm less than or equal to 280°C and greater than 200°C, preferably greater than 220°C, prepared in situ by bulk melt polycondensation polymerization of a reactive precursor composition comprising according to A at least one first polyamide prepolymer A1 bearing two identical functions X (X and X) or Y (Y and Y) and at least one second polyamide prepolymer A2 bearing two identical functions X (X and X) or Y (Y and Y), different from those of A1 and coreactive with respect to those of A1, or of a precursor composition comprising according to B at least one prepolymer bearing (on the same chain) two different functions X and Y coreactive with one another, or of a precursor composition according to a mixture of (A + B), with said functions X and Y being respectively carboxy (X) and amine (Y) and vice versa (Y and X), said glass transition temperatures Tg and melting temperatures Tm being measured using a differential scanning calorimeter (DSC), after a second heating pass, according to the ISO 11357-2:2013 and 11357-3:2013 standards, with a heating and cooling rate of 20°C/min, and **in that** said process comprises the following successive steps:
i) preparation of the reactive mixture A: (A1 + A2) or of the reactive mixture (A + B) : (A1 + A2 + B) by melt blending the components or melting said prepolymer B if it is the only component of said reactive precursor composition, at a temperature greater than that of the melting temperature Tm of the mixture A or of the mixture (A + B) or of the Tm of said prepolymer B if it is the only component of said precursor composition,
ii) continuous impregnation of said fibers with said reactive precursor composition, which is, as appropriate, the mixture A or (A + B) or said prepolymer B, in the molten state, with a viscosity of < 100 Pa.s, more preferentially < 50 Pa.s, more preferably < 10 Pa.s under the impregnation conditions, in an open heated impregnation chamber (2), said impregnation being followed by a preforming at the outlet of the impregnation chamber (2) by means of a die (3), said melt viscosity being determined with a Physica MCR301 rheometer, under nitrogen scanning at the given temperature under shear of 100 s⁻¹, between two parallel planes with a diameter of 50 mm,
iii) in situ bulk melt polycondensation polymerization in said impregnation chamber (2) and/or outside of said impregnation chamber, in a dedicated zone (4) separate from said impregnation chamber (2) and from a die (3) for preforming said material and with said zone (4) located after the impregnation chamber and said die (3) and with a time and a polymerization temperature controlled so that the polymerization temperature is greater than the melting temperature Tm of said thermoplastic matrix polyamide,
iv) cooling of said material
and with said final polyamide of said matrix and said prepolymers A1, A2 or B having the same amide unit composition and said amide units being derived from:
a) a diacid component which is 95 to 100 mol%, preferably 100 mol% of terephthalic structure, with the presence of 0 to 5 mol% of isophthalic diacid, preferably a) being 100% the terephthalic diacid,
b) a diamine component composed of:
b1) from 55 to 85 mol%, preferably from 55 to 80 mol% of a C₉, C₁₀, C₁₁ or C₁₂ aliphatic linear diamine, and
b2) from 15 to 45 mol%, preferably from 20 to 45 mol% of a diamine different from b1), selected from:
b21) a mono-branched aliphatic diamine with methyl or ethyl substituent and having a difference in chain length relative to the associated diamine b1) of at least two carbons, said diamine b2) preferably being 2-methylpentamethylenediamine
b22) m-xylylene diamine (mXD) or
b23) a C₄ to C₁₈ linear aliphatic diamine when b1) is a C₁₀ to C₁₂ linear aliphatic diamine and with b23) being a C₁₀ to C₁₈ diamine when said diamine b1 is a C₉ diamine,
and
c) optionally, an amino acid or, as appropriate, the corresponding C₆ to C₁₂, preferably C₆, C₁₁ or C₁₂, and more preferentially C₁₁, lactam, with c) representing no more than 30 mol% relative to a) or relative to b).

2. The process according to claim 1, **characterized in that** said polymerization is carried out in said impregnation chamber (2).

3. The process according to claim 1, **characterized in that** said polymerization is carried out in said impregnation chamber (2) with an additional polymerization, referred to as post-polymerization, in said zone (4) separate from said impregnation chamber (2) and from said die (3).

4. The process according to claims 1 to 3, **characterized in that** before step i) and step ii) there is a step of preheating, in a dedicated zone (1), said fibers before entry into said impregnation chamber (2).

5. The process according to one of claims 1 to 4, **characterized in that** the degree of polymerization at the outlet of the die (3) is identical to that of the targeted final polyamide for said thermoplastic matrix.

6. The process according to one of claims 1 to 4, **characterized in that** the degree of polymerization at the outlet of said die (3) remains lower than that of the targeted final polyamide for said thermoplastic matrix and that in this case, said process comprises an additional step of post-polymerization in a dedicated zone (4) separate from said die (3).

7. The process according to claim 6, **characterized in that** said dedicated zone (4) separate from said die (3) is a furnace, optionally a vacuum furnace and optionally there is an additional step of shaping said composite material at the outlet of said furnace.

8. The process according to one of claims 1 to 7, **characterized in that** said heated impregnation chamber (2) has a(n) (increasing) temperature gradient between the inlet and the outlet of said impregnation chamber (2).

9. The process according to one of claims 1 to 8, **characterized in that** said polyamide comprises b1), b2) and c) and that the molar ratio in % of c / (b1+b2) ranges from 5 to 30% and preferably from 10 to 30%.

10. The process according to one of claims 1 to 9, **characterized in that** said polyamide comprises c) chosen from 11-aminoundecanoic acid or 12-aminolauric acid or lauryl lactam.

11. The process according to one of claims 1 to 10, **characterized in that** said polyamide has, as components, a) terephthalic acid, b1) 1,10-decamethylenediamine, b2) 1,6-hexamethylenediamine or 2-methylpentamethylenediamine (MPMD) or mXD and c) 11-aminoundecanoic acid or 12-aminolauric acid or lauryl lactam.

12. The process according to one of claims 1 to 11, **characterized in that** said polyamide has, as components, a) terephthalic acid, b1) 1,10-decamethylenediamine, b2) 1,6-hexamethylenediamine and c) 11-aminoundecanoic acid.

13. The process according to one of claims 1 to 11, **characterized in that** said polyamide has, as components, a) terephthalic acid, b1) 1,10-decamethylenediamine, b2) 1,6-hexamethylenediamine and c) 12-aminoundecanoic acid.

14. The process according to one of claims 1 to 10, **characterized in that** b1) is 1,10-decamethylenediamine and b2) is chosen from MPMD or mXD and a) is terephthalic acid.

15. The process according to one of claims 1 to 14, **characterized in that** the molar ratio of b1 / (b1+b2) ranges from 55 to 75% and **in that** the molar ratio of b2 / (b1+b2) ranges from 25 to 45%.

16. The process according to one of claims 1 to 15, **characterized in that** said reactive precursor composition comprises at least one nanofiller of carbon origin chosen from: carbon black, graphenes, carbon nanofibrils and carbon nanotubes, said nanofiller being added in a form which is predispersed in at least one constituent a), b) or c) that is the most fluid.

17. The process according to one of claims 1 to 16, **characterized in that** it is a pultrusion with said fibers being continuously pultruded.

18. The process according to one of claims 1 to 17, **characterized in that** said precursor composition comprises, in addition to said prepolymers, an additive which absorbs the radiation from a UV laser at a specific wavelength or from IR heating or from microwave heating or from induction heating for the purposes of reheating said composite, in particular which is pultruded, before a complementary conversion operation, in particular to the pultrusion, either by heat stamping or by overmolding.

19. The process according to one of claims 1 to 18, **characterized in that** said fibers are long fibers with an L/D > 1000, preferably > 2000.

20. The process according to one of claims 1 to 19, **characterized in that** said fibers are selected from mineral fibers, preferably glass, carbon or basalt fibers, in particular glass or carbon fibers, or from synthetics, preferably aramid fibers or polyaryletherketone fibers.

21. The process according to one of claims 1 to 20, **characterized in that** it relates to the manufacture of a structural part based on said composite material.

22. The process according to claim 21, **characterized in that** said part is a part in the field of road, rail, sea, aeronautical or aerospace transport or in mechanical construction or in the building industry or in parks and leisure or for producing a reinforcement for shields or panels for protection against the impact of projectiles.

23. The process according to either of claims 21 and 22, **characterized in that** said structural part is a motor vehicle part, optionally inserted into a metal structure such as the body in white of a vehicle, optionally subjected to a cycle of thermochemical treatment by cataphoresis.
